# EUROPÄISCHE PATENTSCHRIFT

(11) **EP 0 692 423 B1**
(45) Veröffentlichungstag und Bekanntmachung des Hinweises auf die Patenterteilung: **18.03.1998**
(21) Anmeldenummer: 95110444.7
(22) Anmeldetag: 05.07.1995
(51) Int. Cl.: B62D 25/20, B62D 29/02, B61D 17/10, B32B 21/04, E04F 15/02, B60R 13/08

(54) **Schalldämmende Fussbodenplatte für Fahrzeuge mit mindestens einer Sperrholzplatte**
Sound damping floor board for vehicles with at least one plywood sheet
Panneau acoustique de plancher pour véhicules avec au-moins un feuille de contre-plaqué

(30) Priorität: 12.07.1994 DE 9410972 U
(43) Veröffentlichungstag der Anmeldung: 17.01.1996
(73) Patentinhaber: Rudolf Rost Sperrholz GmbH, 22523 Hamburg (DE)
(72) Erfinder: Rost, Rudolf, D-22523 Hamburg (DE); Rost, Volker, D-25462 Rellingen (DE)
(74) Vertreter: Wurm, Maria Bernadette, Dr.

(56) Entgegenhaltungen:
- GB-A- 566 666
- GB-A- 2 071 111
- GB-A- 2 139 557
- GB-A- 2 180 860
- RAIL EN WEG, Bd. 40, Nr. 6, 16.März 1967 Seite 114

## Beschreibung

Die Erfindung betrifft die Verwendung einer Platte, die aus zwei im Abstand voneinander angeordneten Sperrholzplatten besteht, zwischen denen eine Kernplatte aus Kork angeordnet ist.

Ein derartige Platte als Fußbodenplatte für den Trockenausbau von Gebäuden ist durch die GB-A-2 180 860 bekannt. Bei dieser Bauplatte wird gepreßter Kork zwischen zwei Sperrholzplatten angeordnet, wobei diese Platte wärmedämmende Eigenschaften hat.

Es ist ferner bekannt, im Waggon- und Fahrzeugbau die Innenböden der Fahrzeuge aus Sperrholz in verschiedenen Holzarten auszubilden. Sperrholzböden werden bevorzugt, um die starken Fahrgeräusche von z.B. Schienenfahrzeugen zu mildern. Hierzu ist die Verwendung von Sperrholzböden bekannt, die mit Salzen getränkt sind. Diese haben den Nachteil eines sehr hohen Gewichts. Ein weiterer Nachteil dieser bekannten Bodenplatten besteht darin, daß sie nur schwierig entsorgt und recycelt werden können. Es sind auch Fußbodenplatten für Land- und Schienenfahrzeuge bekannt, die aus zwei Sperrholzplatten bestehen, zwischen denen eine Schwerschichtmatte angeordnet ist. Diese Schwerschichtmatten bestehen im wesentlichen aus weichen Kunststoffolien von drei bis vier Millimeter Dicke, in die schwere anorganische Füllstoffe eingearbeitet sind. Bei derartigen Fußbodenplatten wird zur Realisierung der Schalldämmung die Massewirkung der Schwerschichtfolie benutzt, so daß hier für die Schalldämmung im wesentlichen die Wirkung der Masse verantwortlich ist (Impedanzerhöhung). Die auf die Platte auf der Seite mit hohem Schalldruckpegel einwirkende Schallenergie (Luftschall) muß eine große Masse in Schwingung versetzen (Umwandlung in Körperschall), damit es auf der anderen Seite zu einer Schallabstrahlung (Luftschall) kommen kann. Außerdem haben diese Platten bedingt durch die Schwerschichtmatte ein hohes Gewicht und können ebenfalls nur schwierig entsorgt und recycelt werden.

Die Aufgabe der Erfindung besteht darin, für den Ausbau von Land- und Schienfahrzeugen eine Fußbodenplatte zu verwenden, die bei vermindertem Gewicht ausreichend hohe Schalldämmwerte und auch die Erzielung verbesserter K-Werte für die Wärme-Kälte-Isolierung ermöglicht.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben.

Bei der erfindungsgemäß verwendeten Fußbodenplatte wird zwischen zwei Sperrholzplatten als schubweiches Material Kork zur Realisierung der Schalldämmung eingesetzt. Die zur Anregung der Schwingbewegung notwendige Energie ist durch die reduzierte Masse gegenüber den nach dem Stand der Technik bekannten Fußbodenplatten deutlich geringer. Allerdings ist die Eigendämpfung des Materials größer, so daß ein erheblicher Anteil der Schallenergie durch Reibungsvorgänge in Wärme umgewandelt wird. Dies bedeutet, daß der Körperschall deutlich gedämmt wird und die Schwingbewegung, die zur Schallabstrahlung erforderlich ist, deutlich reduziert wird. Die starke Körperschalldämmung drückt sich im 75%ig höheren Verlustfaktor von erfindungsgemäß verwendeten Fußbodenplatten gegenüber den nach dem Stand der Technik bekannten Fußbodenplatten aus. Zur Realisierung und Nutzung des Vertustfaktors ist eine schubweiche Verbindung zwischen den beiden Sperrholzplatten erforderlich, wie sie nach der Erfindung durch die Kernplatte aus Kork realisiert wird.

Nach der Erfindung wird gegenüber bekannten in Fahrzeugen verwendeten Fußbodenplatten eine solche eingesetzt, die sich bei hohen Schalldämmeigenschaften durch ein stark vermindertes Gewicht auszeichnet. Diese Gewichtsverminderung ermöglicht ein geringeres Gewicht des betreffenden Fahrzeugs, so daß dessen Betriebskosten gesenkt werden. In einer besonders vorteilhaften Ausgestaltung besteht die verwendete Fußbodenplatte aus zwei Sperrholzplatten, die 6,5 oder 9 mm stark sind und zwischen denen eine Kernplatte aus Kork mit einer Dicke von 3 oder 4 mm sowie einem Raumgewicht von ca. 260 kg/m³ angeordnet ist. Eine derartige Fußbodenplatte ermöglicht Schalldämmwerte von 30 bis 31 db bei einem Raumgewicht von ca. 650 kg/m³. Bekannte Fußbodenplatten mit vergleichbaren Schalldämmwerten, die eine Schwerschichtmatte wie z. B. eine biegeweiche schwere Kunststoffmatte aufweisen, besitzen dagegen Raumgewichte von 800 - 1000 kg/m³. Eine weitere Verbesserung des Schalldämmwertes und des K-Wertes ist durch weitere Verstärkung der Kernschicht der Fußbodenplatte oder Aufteilen der Kernschicht in zwei Kernplatten mit einer zwischengelagerten Furnierplatte möglich. Bei Ausbildung der Fußbodenplatte aus reinen Holzprodukten, die chemisch nicht behandelt sind, besteht ein weiterer Vorteil darin, daß diese Produkte leicht wieder entsorgt werden können, da weder eine Stofftrennung in Holz und Metallanteile noch eine Berücksichtigung eines Säureeinflusses erforderlich ist. Darüberhinaus sind die Fußbodenplatten bei Verwendung einer Kernschicht aus Kork resident gegen Fäulnis. Vorzugsweise werden die Sperrholzplatten aus Birkensperrholz hergestellt.

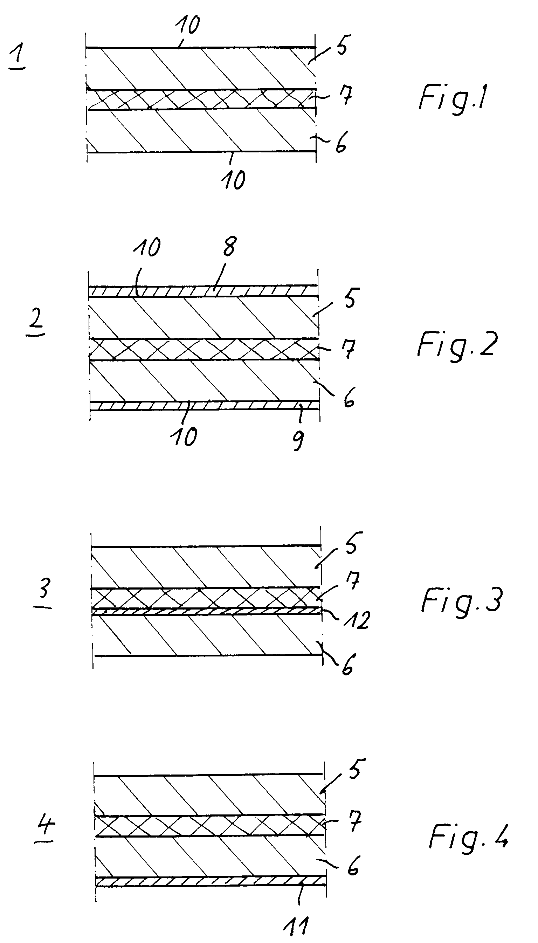

Die Erfindung wird nachstehend näher anhand von in den Zeichnungen schematisch dargestellten Verwendungsbeispielen der Fußbodenplatten erläutert. Hierbei zeigen
Fig. 1 bis Fig. 4 je eine Fußbodenplatte in einer Queransicht im Ausschnitt im Schnitt.

Die Fußbodenplatte 1 nach Fig. 1 besteht aus zwei Sperrholzplatten 5, 6 zwischen denen eine Kernplatte 7 aus Kork angeordnet ist. Die Sperrholzplatten 5, 6 bestehen vorzugsweise aus Birkensperrholz und sind mit der Kernplatte 7 z.B. durch Leimung verbunden. Die Kernplatte 7 besteht aus Kork. Bei einer gewählten Ausführungsform wurden zwei 6,5 mm Sperrholzplatten, 5, 6 aus Birkenholz mit einer 3 mm starken Kernplatte 7 aus Kork verleimt. Hierbei verringerte sich das Gewicht der Fußbodenplatten um ca. 400 kg/m³ gegenüber bekannten vergleichbaren Fußbodenplatten, wobei gleichzeitig ein Schalldämmwert von 31 db erzielt wurde. Dieser konnte durch Verstärkung der Kernplatte 7 aus Kork auf 4 mm auf etwa 33 bis 34 db vergrößert werden.

Die Fußbodenplatte 2 nach Fig. 2 besteht aus einer Fußbodenplatte 1, bei der auf der äußeren Oberfläche 10 der Sperrholzplatten 5, 6 jeweils eine Beschichtung 8, 9 vorgesehen ist. Die Beschichtung kann filmartig ausgebildet sein und z.B. aus Phenol- oder Melaminharz bestehen. Es ist möglich, die Beschichtungen 8, 9 glatt oder in Strukturprägung auszubilden.

Bei der Fußbodenplatte 3 nach Fig. 3 ist zwischen der Kernplatte 7 aus Kork und der Sperrholzplatte 6 eine dünne Metallfolie angeordnet. Diese Metallfolie 12 besteht vorzugsweise aus Blei und verstärkt die Schalldämmeigenschaften.

Die Fußbodenplatte 4 nach Fig. 4 besteht aus einer Fußbodenplatte 1, bei der auf der äußeren Oberfläche 10 der Sperrholzplatte 7 ein Blechzuschnitt 11 angeordnet ist. Der Blechzuschnitt 11 kann aus Aluminium oder verzinktem Stahlblech bestehen. Es ist möglich, eine weitere Metallfolie 12 auf der Oberfläche 10 der anderen Sperrholzplatte 5 vorzusehen.

Ergänzend zu den beschriebenen Fußbodenplatten 1, 2, 3, 4 kann auf der Unterseite auch ein besonderer Unterbodenschutz z.B. gegen Fäulnis aufgebracht werden. Dieser Unterbodenschutz kann ein Brandschutzmittel sein. Hierdurch werden diese so ausgebildeten Fußbodenplatten 1, 2, 3, 4 als schwer brennbar eingestuft.

Es ist auch möglich, die Fußbodenplatten 1, 2, 3, 4 asymmetrisch auszubilden. So können die Sperrholzplatten 5, 6 z.B. unterschiedliche Dicken aufweisen.

Zur Erhöhung der Schalldämmung können zwischen den mindestens zwei Sperrholzplatten 5, 6 auch zwei Kernplatten 7 aus Kork angeordnet werden, zwischen denen eine Furnierplatte aus Schälfurnier od. dgl. vorgesehen ist. Diese Furnierplatte ist mit den Kernplatten 7 aus Kork ganzflächig verbunden.

## Patentansprüche

1. Verwendung einer Platte, die aus zwei im Abstand voneinander angeordneten Sperrholzplatten (5, 6) besteht, zwischen denen eine Kernplatte (7) aus Kork angeordnet ist, dadurch gekennzeichnet, daß die Platte als schalldämmende Fußbodenplatte (1, 2, 3, 4) für Land- und Schienenfahrzeuge verwendet wird, wobei die Kernplatte (7) mit den Sperrholzplatten (5, 6) fest verleimt ist.

2. Verwendung einer Fußbodenplatte nach Anspruch 1, dadurch gekennzeichnet, daß auf der äußeren Oberfläche (10) der mindestens einen Sperrholzplatte (5; 6) eine filmartige Beschichtung (8; 9) angeordnet ist.

3. Verwendung einer Fußbodenplatte nach Anspruch 1 und 2, dadurch gekennzeichnet, daß auf mindestens einer äußeren Oberfläche (10) einer Sperrholzplatte (5; 6) eine Schutzschicht als Unterbodenschutz od. dgl. angeordnet ist.

4. Verwendung einer Fußbodenplatte nach Anspruch 1 bis 3, dadurch gekennzeichnet, daß zwischen der Kernplatte (7) und mindestens einer Sperrholzplatte (5; 6) eine dünne Metallfolie (12) angeordnet ist.

5. Verwendung einer Fußbodenplatte nach Anspruch 4, dadurch gekennzeichnet, daß die Metallfolie (12) aus Blei besteht.

6. Verwendung einer Fußbodenplatte nach Anspruch 1, dadurch gekennzeichnet, daß die Sperrholzplatten (5, 6) aus Birkenholz bestehen.

7. Verwendung einer Fußbodenplatte nach Anspruch 3, dadurch gekennzeichnet, daß die Schutzschicht ein Brandschutzmittel ist.

8. Verwendung einer Fußbodenplatte nach Anspruch 1, dadurch gekennzeichnet, daß zwischen den mindestens zwei Sperrholzplatten (5, 6) zwei Kernplatten (7) aus Kork angeordnet sind, zwischen denen eine Furnierplatte aus Schälfurnier od. dgl. angeordnet und mit den Kernplatten (7) verbunden ist.

9. Verwendung einer Fußbodenplatte nach Anspruch 1, dadurch gekennzeichnet, daß die Sperrholzplatten (5, 6) ca. 6,5 mm bis 9 mm dick ausgebildet sind.

10. Verwendung einer Fußbodenplatte nach Anspruch 1, dadurch gekennzeichnet, daß die Kernplatte (7) ca. 3 mm bis 4 mm dick ist und aus einem Kork mit einem Raumgewicht von ca. 260 kg/m³ besteht.

## Claims

1. Use of a tile, which comprises two spaced plywood boards (5, 6), between which is placed a cork core plate (7), characterized in that the tile is used as a sound insulating floor tile (1, 2, 3, 4) for land and rail vehicles, the core plate (7) being firmly glued to the plywood boards (5, 6).

2. Use of a floor tile according to claim 1, characterized in that a film-like coating (8, 9) is placed on the outer surface (10) of the at least one plywood board (5, 6).

3. Use of a floor tile according to claim 1 and 2, characterized in that a protective coating is placed as an underbody protection or the like on at least one outer surface (10) of a plywood board (5, 6).

4. Use of a floor tile according to claim 1 to 3, characterized in that a thin metal foil (12) is placed between the core plate (7) and at least one plywood board (5, 6).

5. Use of a floor tile according to claim 4, characterized in that the metal foil (12) is made from lead.

6. Use of a floor tile according to claim 1, characterized in that the plywood boards (5, 6) are made from birch wood.

7. Use of a floor tile according to claim 3, characterized in that the protective coating is a fireproofing coating.

8. Use of a floor tile according to claim 1, characterized in that between at least two plywood boards (5, 6) are placed two cork core plates (7), between which is placed a veneer sheet of pared veneer or the like and connected to the core plate (7).

9. Use of a floor tile according to claim 1, characterized in that the plywood boards (5, 6) are approximately 6.5 to 9 mm thick.

10. Use of a floor tile according to claim 1, characterized in that the core plate (7) is approximately 3 to 4 mm thick and made from a cork with a bulk density of approximately 260 kg/m³.

## Revendications

1. Utilisation d'une plaque qui est constituée par deux plaques de contreplaqué (5, 6) placées à un certain écart l'une de l'autre, entre lesquelles une plaque de noyau (7) en liège est placée, caractérisée en ce que la plaque est utilisée comme plaque de sol insonorisante (1, 2, 3, 4) pour des véhicules terrestres et à rails, la plaque de noyau (7) étant collée de manière fixe aux plaques de contreplaqué (5, 6).

2. Utilisation d'une plaque de sol selon la revendication 1, caractérisée en ce qu'une enduction du type pellicule (8 ; 9) est placée sur la surface extérieure (10) de la plaque de contreplaqué (5 ; 6) qui existe au moins.

3. Utilisation d'une plaque de sol selon la revendication 1 et 2, caractérisée en ce qu'une couche de protection est placée comme protection sous la plaque de sol ou équivalent sur au moins une surface extérieure (10) d'une plaque de contreplaqué (5 ; 6).

4. Utilisation d'une plaque de sol selon les revendications 1 à 3, caractérisée en ce qu'une mince feuille de métal (12) est placée entre la plaque de noyau (7) et au moins une plaque de contreplaqué (5 ; 6).

5. Utilisation d'une plaque de sol selon la revendication 4, caractérisée en ce que la feuille de métal (12) est constituée par du plomb.

6. Utilisation d'une plaque de sol selon la revendication 1, caractérisée en ce que les plaques de contreplaqué (5, 6) sont constituées en bois de bouleau.

7. Utilisation d'une plaque de sol selon la revendication 3, caractérisée en ce que la couche de protection est un moyen coupe-feu.

8. Utilisation d'une plaque de sol selon la revendication 1, caractérisée en ce que deux plaques de noyau (7') en liège sont placées entre les deux plaques de contreplaqué (5, 6) qui existent au moins, plaques de noyau entre lesquelles une plaque de placage en placage déroulé ou équivalent est placée et est reliée aux plaques de noyau (7).

9. Utilisation d'une plaque de sol selon la revendication 1, caractérisée en ce que les plaques de contreplaqué (5, 6) sont configurées d'une épaisseur d'environ 6,5 mm à 9 mm.

10. Utilisation d'une plaque de sol selon la revendication 1, caractérisée en ce que la plaque de noyau (7) a une épaisseur d'environ 3 mm à 4 mm et est constituée par un liège avec un poids spécifique d'environ 280 kg/m³.
